# EUROPEAN PATENT APPLICATION

(11) **EP 4 657 926 A1**
(43) Date of publication of application: **03.12.2025**
(21) Application number: 24759507.7
(22) Date of filing: 01.02.2024
(51) Int. Cl.: H04W 36/00

(54) **RATE PREDICTION METHOD, ELECTRONIC DEVICE AND COMPUTER READABLE STORAGE MEDIUM**

(30) Priority: 20.02.2023 CN 202310183548
(71) Applicant: ZTE CORPORATION, Shenzhen, Guangdong 518057 (CN)
(72) Inventor: GAO, Chao, Shenzhen, Guangdong 518057 (CN); NIU, Kang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/075204
(87) International publication number: WO 2024/174830

(57) **Abstract**

Disclosed are a rate prediction method, an electronic device and a computer readable storage medium. The rate prediction method includes: obtaining a neighboring cell fingerprint database sent by a target neighboring cell, the neighboring cell fingerprint database is generated by performing grid division according to user information of a historical user account, counting downlink spectral efficiency corresponding to user information belonging to the same grid, and adding the downlink spectral efficiency to the corresponding grid; based on the neighboring cell fingerprint database, determining the neighboring cell downlink perceived rate of the target user account in the target neighboring cell.

## Description

### CROSS-REFERENCE TO RELATED APPLICATIONS

This application claims priority to Chinese Patent Application No. 202310183548.3, filed on February 20, 2023, the entire contents of which are incorporated herein by reference.

### TECHNICAL FIELD

The present application relates to the technical field of communication, and in particular to a rate prediction method, an electronic device, and a computer readable storage medium.

### BACKGROUND

Currently, the evaluation of whether the user needs to trigger the switching of neighboring cells is based on RSRP (reference signal receiving power), RSRQ (reference signal receiving quality) and SINR (signal to interference plus noise ratio). However, RSRP, RSRQ and SINR can only reflect the quality of the downlink channel and cannot fully reflect the downlink perception experience of the user. In real life, mobile phone users are more concerned about the downlink perceived rate, and the downlink channel quality is only one of the factors affecting the downlink perceived rate and cannot fully reflect the downlink perceived rate. Therefore, the results obtained using the traditional neighboring cell evaluation method will deviate from the actual results desired by the user and cannot meet the user's expectations.

### SUMMARY

The main purpose of the present application is to provide a rate prediction method, an electronic device and a computer-sustainable storage medium, aiming to solve the technical problem of how to improve the accuracy of the prediction of the downlink perceived rate for neighboring cells.

To achieve the above purpose, the present application provides a rate prediction method, applied to a service cell, including:
obtaining a neighboring cell fingerprint database sent by a target neighboring cell, the neighboring cell fingerprint database is generated by performing grid division according to user information of a historical user account, counting downlink spectral efficiency corresponding to user information belonging to a same grid, and adding the downlink spectral efficiency to a corresponding grid; and
determining a neighboring cell downlink perceived rate of a target user account in the target neighboring cell based on the neighboring cell fingerprint database.

In addition, in order to achieve the above purpose, the present application further provides a rate prediction method, applied to a target neighboring cell, including:
performing grid division according to user information of a historical user account to obtain multiple grids;
counting downlink spectral efficiency corresponding to user information belonging to a same grid, and adding the downlink spectral efficiency to the same grid to generate a neighboring cell fingerprint database; and
sending the neighboring cell fingerprint database to a serving cell, the serving cell determines neighboring cell downlink perceived rate of the target user account in the target neighboring cell based on the neighboring cell fingerprint database.

In addition, in order to achieve the above purpose, the present application further provides a rate prediction method, applied to a base station, including:
performing grid division according to user information of a historical user account to obtain multiple grids;
counting downlink spectral efficiency corresponding to user information belonging to a same grid, and adding the downlink spectral efficiency to the same grid to generate a neighboring cell fingerprint database; and
determining a neighboring cell downlink perceived rate of the target user account in the target neighboring cell based on the neighboring cell fingerprint database.

In addition, in order to achieve the above purpose, the present application further provides an electronic device, which includes: a memory, a processor, and a rate prediction program stored in the memory and executable on the processor. When the rate prediction program is executed by the processor, the rate prediction method as described above is implemented.

In addition, in order to achieve the above purpose, the present application further provides a computer readable storage medium, a rate prediction program is stored in the computer readable storage medium, and when the rate prediction program is executed by the processor, the rate prediction method as described above is implemented.

### BRIEF DESCRIPTION OF THE DRAWINGS

FIG. 1 is a flow chart of a rate prediction method according to a first embodiment of the present application.
FIG. 2 is a flow chart of the rate prediction method according to a second embodiment of the present application.
FIG. 3 is a flow chart of the rate prediction method according to a third embodiment of the present application.
FIG. 4 is a flow chart of the rate prediction method according to a fourth embodiment of the present application.
FIG. 5 is a module diagram of a rate prediction system in the rate prediction method according to the present application.
FIG. 6 is a device structure diagram of a hardware operating environment involved in the rate prediction method according to some embodiments of the present application.

The purpose, features and advantages of the present application will be further described in conjunction with the embodiments and with reference to the accompanying drawings.

### DETAILED DESCRIPTION OF THE EMBODIMENTS

It should be understood that the specific embodiments described herein are only used to explain the present application and are not used to limit the present application.

In a wireless communication system, as the user's mobile location changes, the network side needs to monitor the user's service quality in real time to ensure the user's optimal perceived experience.

Normally, a base station evaluates whether the user needs to trigger a handover by monitoring the RSRP, RSRQ and SINR values of the terminal in the serving cell and the neighboring cell. When there are multiple candidate handover neighboring cells, the neighboring cells are also selected based on RSRP, RSRQ, and SINR. However, RSRP, RSRQ, and SINR can only reflect the quality of the downlink channel, and cannot fully reflect the user's downlink perception experience, resulting in low accuracy in predicting the downlink perceived rate of the neighboring cell. Therefore, to avoid this defect, in these embodiments, the downlink perceived rate of the user in the neighboring cell is predicted in advance, so that the neighboring cell can be selected based on the perceived rate during the handover process to ensure that the user is always in a cell with the best downlink perception. For example, for downloading users, the demand for downlink rate is relatively large. At this time, the neighboring cell with the largest downlink perceived rate can be selected for the user based on the downlink perceived rate. In addition, in the process of predicting the downlink perceived rate, the downlink spectral efficiency (SE) of the user in the neighboring cell needs to be predicted first, and the average downlink SE of the neighboring cell can be used. However, the average downlink SE of the neighboring cells can only reflect the average level of the neighboring cells, and cannot represent the actual situation of a specific user. Therefore, using the average downlink SE of the neighboring cells for rate prediction will result in a large error. Therefore, in these embodiments, the neighboring cell fingerprint database can be used to predict the downlink SE of the neighboring cells to improve the accuracy in predicting the downlink perceived rate of the neighboring cells.

In addition, in these embodiments, the downlink perceived rate of the user in the neighboring cell can be evaluated, which can be applied to a communication system. In the mobility process of the communication system (such as handover, PSCell (primary secondary cell) change, SN (secondary node) addition/change, CA (carrier aggregation) auxiliary carrier addition/change), the downlink perceived rate of the user in the neighboring cell is estimated, and a cell with the best downlink perceived rate is selected for the user. It is also possible to construct an SE grid by associating some indicators strongly related to SE with the scheduling SE of historical users. Before handover, the values of these indicators strongly related to SE are obtained from the neighboring cell, and then the SE grid is queried to obtain SE information of the neighboring cell.

The embodiments of the present application are further described below in conjunction with the accompanying drawings.

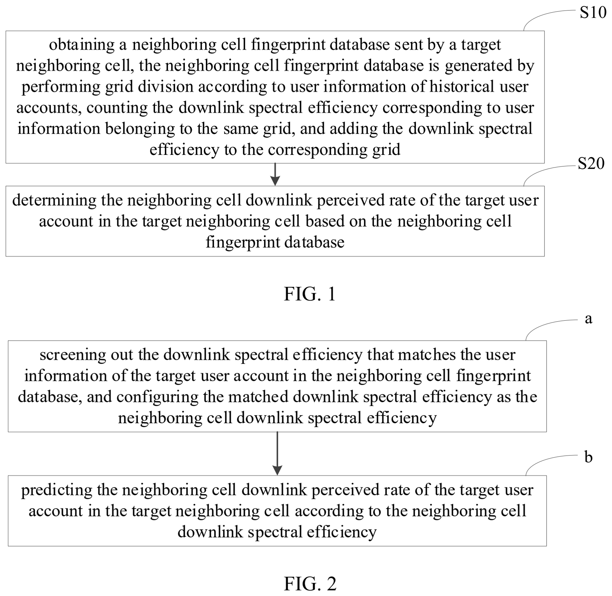

Referring to FIG. 1, the present application provides a rate prediction method. In the first embodiment of the rate prediction method, the rate prediction method, applied to a serving cell, includes:
Step S10, obtaining a neighboring cell fingerprint database sent by a target neighboring cell, the neighboring cell fingerprint database is generated by performing grid division according to user information of historical user accounts, counting the downlink spectral efficiency corresponding to user information belonging to the same grid, and adding the downlink spectral efficiency to the corresponding grid.

In a mobile communication system, as the user moves, the terminal used by the user may move from the coverage of the current serving cell to the coverage of another cell. When the wireless signal quality of the UE serving cell is poor, it is usually necessary to switch the UE to the neighboring cell (i.e., neighboring cell) with better wireless signal quality. This process is called handover.

In these embodiments, when the user is in a multi-cell coverage area, it is necessary to select a cell with the best downlink perceived rate for the user to perform handover, SN addition, SN change, CA auxiliary carrier addition, CA auxiliary carrier replacement, PSCell change in MR-DC (multi-rate dual connectivity, multi-system dual connectivity), etc., the method in these embodiments can be used to estimate the downlink perceived rate of the target user account corresponding to the terminal held by the user in different cells, and select the cell or cell combination with the best downlink perceived rate from these cells according to the estimated downlink perceived rate for handover, SN addition, SN change, CA auxiliary carrier addition, CA auxiliary carrier replacement, PSCell change in MR-DC, etc.

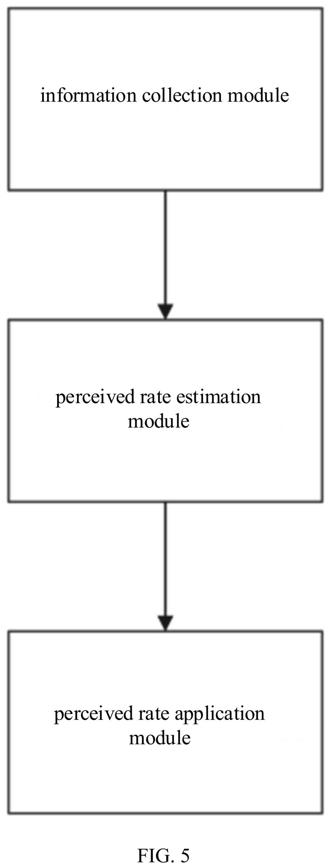

In addition, in these embodiments, a rate prediction system for running the rate prediction method is also provided. In the rate prediction system, as shown in FIG. 5, an information collection module, a perceived rate estimation module and a perceived rate application module are provided. The information collection module can be configured to collect information required for estimating the rate of the neighboring cell: for example, collect cell-level information required for estimating the rate of the neighboring cell; collect UE-level information required for estimating the rate of the neighboring cell. The cell-level information may include at least one of the number of users in the neighboring cell, the utilization rate of the neighboring cell downlink RB, the neighboring cell downlink bandwidth and the neighboring cell downlink SE grid. The UE-level information may include at least one of the neighboring cell downlink reference signal RSRP measured by the terminal, the neighboring cell downlink reference signal SINR measured by the terminal, the downlink path loss of the terminal in the neighboring cell, the location information of the terminal and the chip type of the terminal. The perceived rate estimation module can be configured to process the information collected by the information collection module to estimate the downlink perceived rate of the user in the neighboring cell. The perceived rate application module can be configured to make decisions on operations such as handover based on the downlink perceived rate of the user in the neighboring cell estimated by the perceived rate estimation module.

Therefore, in these embodiments, when the terminal held by the user needs to perform handover, SN addition, SN change, CA auxiliary carrier addition, CA auxiliary carrier replacement, PSCell change in MR-DC and other processing in the serving cell, the user position can be determined first, and all cells covered at the user position can be determined, and all cells except the service cell where the terminal held by the user is located in all covered cells are taken as neighboring cells, and the neighboring cell downlink perceived rate of the terminal in each neighboring cell is calculated for each neighboring cell. At this time, the neighboring cell downlink perceived rate in each neighboring cell can be determined by the target user account logged in the terminal, and the optimal one can be selected according to the downlink perceived rate of each neighboring cell to perform corresponding processing operations.

Therefore, in these embodiments, each cell will first build its own fingerprint database, and can share its own fingerprint database with other cells to realize fingerprint database sharing between cells. Then, if the terminal held by the user needs to perform cell handover or other operation processing, it can first obtain the neighboring cell fingerprint database sent by the target neighboring cell in the service cell. The target neighboring cell can be a neighboring cell that is calculating the neighboring cell downlink perceived rate, not a specific one or more cells. The neighboring cell fingerprint database may include at least one set of corresponding relationships between user information and downlink spectral efficiency. When constructing the neighboring cell fingerprint database, the target neighboring cell divides the grid according to the user information of the historical user accounts in the target neighboring cell, and adds the downlink spectral efficiency corresponding to the user information in the same grid to the corresponding grid. That is, the corresponding relationship between user information and downlink spectral efficiency will be stored in the neighboring cell fingerprint database.

In addition, in one scenario, the serving cell may send the target user account and the user information of the target user account to the target neighboring cell, and the target neighboring cell may feed back the neighboring cell downlink perceived rate of the target user account in the target neighboring cell to the serving cell based on the neighboring cell fingerprint database stored in the target neighboring cell. The serving cell may send the target user account and the user information of the target user account to the base station, and the base station may feed back the neighboring cell downlink perceived rate of the target user account in the target neighboring cell to the serving cell based on the neighboring cell fingerprint database of the target neighboring cell.

The user information includes at least one of the reference signal received power of the neighboring cell downlink reference signal of the user account in the target neighboring cell, the reference signal received quality of the neighboring cell downlink reference signal, the signal to interference plus noise ratio of the neighboring cell downlink reference signal, the neighboring cell downlink path loss, the chip type and location information.

In some embodiments, the user information may also include the reference signal received power of the neighboring cell downlink reference signal of the user account in the target neighboring cell, the reference signal received quality of the neighboring cell downlink reference signal, or the signal to interference plus noise ratio of the neighboring cell downlink reference signal. In addition, to assist in improving the accuracy of grid division in the neighboring cell fingerprint database, the user information may also add at least one of the neighboring cell downlink path loss, chip type and location information on the basis of the reference signal received power of the neighboring cell downlink reference signal of the user account in the target neighboring cell, the reference signal received quality of the neighboring cell downlink reference signal, or the signal to interference plus noise ratio of the neighboring cell downlink reference signal.

The reference signal received power of the neighboring cell downlink reference signal can be the RSRP of the neighboring cell downlink reference signal, can be a key parameter representing the wireless signal strength in the LTE network, or can be used to measure the downlink coverage. The reference signal reception quality of the neighboring cell downlink reference signal can be the RSRQ of the neighboring cell downlink reference signal, which can be used to measure the reception quality of the neighboring cell downlink reference signal. The signal to interference plus noise ratio of the neighboring cell downlink reference signal can be the SINR of the neighboring cell downlink reference signal, which can be the ratio of the strength of the received useful signal to the strength of the received interference signal (noise and interference). The neighboring cell downlink path loss can be the path loss of the target neighboring cell downlink. The location information may be the coordinate position of the target user account (i.e. the target user account logged in by the user's terminal) relative to the target neighboring cell. The reference signal may be a periodic signal sent by the base station or a mobile terminal, which is used by the receiving end as a reference for receiving data from a service channel.

Step S20, determining the neighboring cell downlink perceived rate of the target user account in the target neighboring cell based on the neighboring cell fingerprint database.

In these embodiments, after the serving cell obtains or determines the neighboring cell fingerprint database sent by at least one target neighboring cell, the neighboring cell downlink perceived rate of the target user account in the target neighboring cell can be predicted based on the neighboring cell fingerprint database, and the corresponding processing is performed according to the neighboring cell downlink perceived rate, for example, the handover operations are performed. Alternatively, after there are multiple neighboring cell downlink perceived rates corresponding to the target neighboring cells, one is selected for corresponding processing.

For example, when a user who triggers a handover/multi-carrier addition process reports multiple neighboring cells in a measurement report and it is necessary to select a cell with the best downlink perceived rate for the user, the serving cell triggers a prediction for the downlink perceived rate of the neighboring cells. The prediction for the downlink perceived rate requires predicting the downlink SE of the neighboring cells and obtaining the remaining available RB resources of the neighboring cells.

For example, each cell first collects user information of the cell to construct a downlink SE fingerprint database. The collected information includes downlink reference signal RSRP measured by the terminal, downlink reference signal SINR measured by the terminal, downlink path loss, chip type, location information, downlink SE, etc. Each cell divides users with the same characteristics into the same category based on the collected downlink reference signal RSRP measured by the terminal, downlink reference signal SINR measured by the terminal, downlink path loss, chip type, and location information. Each category is a grid, and the mean, maximum, minimum, variance, and other information of the downlink SE of these users are counted in these grids. In the above manner, each cell can generate a fingerprint database of downlink SE, and then each cell exchanges the constructed fingerprint database with other cells, so as to facilitate the prediction of the downlink SE of the cell when other cells hands over to the cell in the future.

In these embodiments, the neighboring cell fingerprint database sent by the target neighboring cell is obtained, and the neighboring cell downlink perceived rate of the target user account in the target neighboring cell is determined based on the neighboring cell fingerprint database. This can avoid the phenomenon that only the quality of the neighboring cell downlink channel can be obtained through SRP, RSRQ, and SINR, and the downlink perceived rate cannot be fully reflected, resulting in low accuracy in the prediction of the neighboring cell downlink perceived rate. Moreover, the prediction is made directly through the neighboring cell fingerprint database of the target neighboring cell. The neighboring cell fingerprint database is generated by dividing grids according to the user information of the historical user account, counting the downlink spectral efficiency corresponding to the user information in the same grid, and adding the downlink spectral efficiency to the corresponding grid, thereby improving the accuracy of the prediction of the neighboring cell downlink perceived rate. In addition, after predicting the neighboring cell downlink perceived rate of the target user account in the target neighboring cell, handover can be performed based on the predicted neighboring cell downlink perceived rate in the subsequent handover process to ensure that the user is always in a cell with optimal downlink perception.

Based on the first embodiment of the present application, a second embodiment of the rate prediction method of the present application is proposed. In these embodiments, referring to FIG. 2, the above step S20, determining the neighboring cell downlink perceived rate of the target user account in the target neighboring cell based on the neighboring cell fingerprint database, includes:
Step a, screening out the downlink spectral efficiency that matches the user information of the target user account in the neighboring cell fingerprint database, and configuring the matched downlink spectral efficiency as the neighboring cell downlink spectral efficiency.

In these embodiments, the serving cell can directly use the neighboring cell fingerprint database to predict the neighboring cell downlink spectral efficiency of the target user account in the user's terminal. The neighboring cell downlink spectral efficiency can indicate the amount of data that can be carried and sent on a resource block (RB) in the target neighboring cell.

When predicting the downlink spectral efficiency of the neighboring cell, the user information corresponding to the target user account can be determined in the serving cell first. That is, various parameter information of the target user account in the target neighboring cell can be collected in the serving cell. The user information of the target user account includes various parameter information, such as the reference signal receiving power of the neighboring cell downlink reference signal of the target user account in the target neighboring cell, the reference signal receiving quality of the neighboring cell downlink reference signal, or the signal to interference plus noise ratio of the neighboring cell downlink reference signal, and can also include the neighboring cell downlink path loss, chip type and location information.

Then, the user information of the target user account is matched with the neighboring cell fingerprint database, to screen out the downlink spectral efficiency that matches the user information of the target user account in the neighboring cell fingerprint database. When matching, the RSRP in the user information can be matched with the RSRP in the neighboring cell fingerprint database, the RSRQ in the user information can be matched with the RSRQ in the neighboring cell fingerprint database, or the SINR in the user information can be matched with the SINR in the neighboring cell fingerprint database. In addition, the neighboring cell downlink path loss, chip type and location information in the user information can also be matched with the neighboring cell downlink path loss, chip type and location information in the neighboring cell fingerprint database.

After determining the user information matching the user information of the target user account in the neighboring cell fingerprint database, the downlink spectral efficiency corresponding to the matching user information in the neighboring cell fingerprint database is used as the downlink spectral efficiency matching the user information of the target user account, and the matched downlink spectral efficiency is used as the neighboring cell downlink spectral efficiency.

Step b, predicting the neighboring cell downlink perceived rate of the target user account in the target neighboring cell according to the neighboring cell downlink spectral efficiency.

After obtaining the neighboring cell downlink spectral efficiency of the target user account in the target neighboring cell through the neighboring cell fingerprint database, the neighboring cell downlink perceived rate of the target user account in the target neighboring cell can be predicted. The neighboring cell downlink perceived rate can be the downlink perceived rate of the target user account (or the terminal held by the user) in the target neighboring cell. The neighboring cell downlink perceived rate may include the maximum amount of data supported by the target neighboring cell for scheduling per second, and the neighboring cell downlink spectral efficiency of the target user account (or the terminal held by the user) in the neighboring cell.

For example, after receiving the measurement report of user handover/multi-carrier addition, the serving cell obtains the neighboring cell downlink reference signal RSRP and the neighboring cell downlink reference signal SINR from the measurement report, then locates the grid where the user is located in the neighboring cell downlink SE fingerprint database in the previous interaction in combination with the downlink path loss of the terminal in the neighboring cell, the chip type of the terminal, and the location information of the terminal, and obtains the downlink SE mean of the neighboring cell from the grid as the neighboring cell downlink SE used for estimating the downlink perceived rate of the neighboring cell. Based on the neighboring cell downlink SE obtained above, combined with the number of remaining available downlink RBs obtained from the neighboring cell, the maximum amount of data supported for transmission in each time slot of the neighboring cell is calculated. The number of remaining available downlink RBs in the neighboring cell is obtained by combining the actual number of RBs remaining in the neighboring cell (calculated by the number of RBs corresponding to the neighboring cell bandwidth and the utilization rate of the neighboring cell downlink RBs) and the average number of available RBs per user in the neighboring cell (calculated by the number of RBs corresponding to the neighboring cell bandwidth and the number of users in the neighboring cell). Finally, combined with the number of downlink time slots available for scheduling in the neighboring cell within 1 second, the maximum amount of data supported for scheduling in the neighboring cell within 1 second is calculated, which is the predicted downlink perceived rate of the neighboring cell. At this point, the serving cell predicts the downlink perceived rates of different neighboring cells in the measurement report, sorts the neighboring cells from large to small according to the downlink perceived rate, and gives priority to the neighboring cell with the largest perceived rate for handover/multi-carrier addition and other processing.

The embodiments of the present application screen out the neighboring cell downlink spectral efficiency that matches the user information of the target user account in the neighboring cell fingerprint database, and predicts the neighboring cell downlink perceived rate of the target user account in the target neighboring cell according to the neighboring cell downlink spectral efficiency, thereby ensuring the validity of the obtained neighboring cell downlink perceived rate.

In some embodiments, predicting the neighboring cell downlink perceived rate of the target user account in the target neighboring cell according to the neighboring cell downlink spectral efficiency includes:
Step c, obtaining the number of available resource blocks remaining in the downlink time slot of the target neighboring cell, and determining the maximum amount of data to be sent in the downlink time slot of the target neighboring cell according to the neighboring cell downlink spectral efficiency and the number of available resource blocks.

In these embodiments, when predicting the neighboring cell downlink perceived rate of the target user account in the target neighboring cell, it is also necessary to evaluate the number of available resource blocks remaining in each downlink time slot in the target neighboring cell in the serving cell, that is, the number of available resource blocks remaining in the downlink time slot in the target neighboring cell. In addition, the serving cell can first obtain the actual number of remaining available resource blocks in the target neighboring cell, and then estimate the number of remaining available resource blocks in each downlink time slot in the target neighboring cell according to the actual number of remaining available resource blocks. The number of available resource blocks can be the number of resource blocks that can be normally used by the target user account in the downlink time slot in the target neighboring cell.

After obtaining the neighboring cell downlink spectral efficiency of the target user account in the target neighboring cell and the number of remaining available resource blocks in each downlink in the target neighboring cell according to the target neighboring cell fingerprint database, the amount of data that can be sent in each downlink time slot in the target neighboring cell can be directly calculated and used as the maximum amount of data sent in the downlink time slot in the target neighboring cell. In some embodiments, when determining the maximum amount of data sent in the downlink time slot in the target neighboring cell, the product of the neighboring cell downlink spectral efficiency and the number of remaining available resource blocks in each downlink time slot in the target neighboring cell can be calculated to obtain the amount of data that can be sent in each downlink time slot in the target neighboring cell, that is, the maximum amount of data sent in the downlink time slot in the target neighboring cell.

Step d, predicting the neighboring cell downlink perceived rate of the target user account in the target neighboring cell according to the maximum amount of data to be sent and the number of downlink time slots corresponding to the target neighboring cell.

After determining the maximum amount of data sent corresponding to each downlink time slot in the target neighboring cell, it is also necessary to obtain the number of downlink time slots available for scheduling in the target neighboring cell within 1 second, use it as the number of downlink time slots for scheduling, then calculate the maximum amount of data supported by the neighboring cell per second according to the number of downlink time slots and the maximum amount of data sent that can be sent in each downlink time slot in the target neighboring cell, and use it as the predicted neighboring cell downlink perceived rate of the target user account in the target neighboring cell. When obtaining the number of downlink time slots available for scheduling in the target neighboring cell within 1 second, it may not be limited to 1 second, but may be other times, which is not limited here. In addition, when calculating the neighboring cell downlink perceived rate, the maximum amount of transmitted data corresponding to the number of scheduled downlink time slots may be added together to obtain the neighboring cell downlink perceived rate of the target user account in the target neighboring cell.

In these embodiments, the maximum amount of data to be sent is determined according to the number of available resource blocks remaining in the downlink time slot in the target neighboring cell and the downlink spectral efficiency of the neighboring cell, and the neighboring cell downlink perceived rate of the target user account in the target neighboring cell is predicted according to the maximum amount of data to be sent and the number of scheduled downlink time slots corresponding to the target neighboring cell, thereby ensuring the accuracy of the predicted downlink perceived rate of the neighboring cell.

In some embodiments, obtaining the number of available resource blocks remaining in the downlink time slot in the target neighboring cell includes:
Step e, determining the number of remaining resource blocks in the target neighboring cell and the average number of first resource blocks per user account in the target neighboring cell.

In these embodiments, when determining the number of available resource blocks remaining in each downlink time slot in the target neighboring cell, the number of remaining resource blocks in the target neighboring cell can be obtained in the serving cell, and the number of first resource blocks per user account in the target neighboring cell is also required. The number of remaining resource blocks can be the number of resource blocks that can actually be used normally in the target neighboring cell. The number of first resource blocks can be the average number of resource blocks that can be used by each user in the target neighboring cell.

Step f, selecting the one with the largest data among the number of remaining resource blocks and the first number of resource blocks as the number of available resource blocks remaining in the downlink time slot of the target neighboring cell.

After obtaining the number of remaining resource blocks and the number of first resource blocks, the number of remaining resource blocks and the number of first resource blocks can be compared, and the one with the largest data can be determined according to the comparison result, so as to determine the number of available resource blocks remaining in each downlink time slot in the target neighboring cell. For example, if the number of remaining resource blocks in the target neighboring cell is greater than the average number of first resource blocks per user account in the target neighboring cell, the number of remaining resource blocks can be directly used as the number of available resource blocks remaining in the downlink time slot in the target neighboring cell. If the number of first resource blocks is greater than the number of remaining resource blocks in the target neighboring cell, the number of first resource blocks can be directly used as the number of available resource blocks remaining in the downlink time slot in the target neighboring cell.

In these embodiments, the one with the largest data among the number of the remaining resource blocks in the target neighboring cell and the average number of first resource blocks per user account in the target neighboring cell is selected as the number of available resource blocks remaining in the downlink time slot in the target neighboring cell, thereby ensuring the validity of the obtained available resource blocks.

In some embodiments, determining the number of remaining resource blocks in the target neighboring cell and the average number of first resource blocks per user account in the target neighboring cell includes:
Step g, determining the number of second resource blocks corresponding to a bandwidth of the target neighboring cell.

In these embodiments, when determining the number of remaining resource blocks of the target neighboring cell, the bandwidth of the target neighboring cell can be first obtained in the serving cell, and the number of resource blocks corresponding to the bandwidth can be determined and used as the number of second resource blocks. The corresponding relationship between the bandwidth and the number of resource blocks is set in advance in the protocol, such as 20M bandwidth corresponding to 100 resource blocks. Therefore, the number of second resource blocks corresponding to the bandwidth of the target neighboring cell can be directly determined according to the corresponding relationship.

In these embodiments, it is also necessary to determine the downlink resource block utilization rate corresponding to the target neighboring cell. The downlink resource block utilization rate can be a default value set in advance, or can be calculated and determined based on the number of resource blocks actually used. For example, assuming that there are 100 resource blocks, if 70 resource blocks are actually used, the downlink resource block utilization rate is 70/100=70%.

Step h, determining the number of remaining resource blocks of the target neighboring cell according to the number of second resource blocks and the downlink resource block utilization rate corresponding to the target neighboring cell.

After determining the number of second resource blocks and the downlink resource block utilization rate, the number of remaining resource blocks in the target neighboring cell can be calculated according to a preset formula. The preset formula can be the number of second resource blocks * (1-downlink resource block utilization rate) = the number of remaining resource blocks in the target neighboring cell. For example, if the number of second resource blocks is 100 and the downlink resource block utilization rate is 70%, the number of resource blocks remaining in the target neighboring cell can be 100* (1-70%) = 30.

Step j, determining the average number of first resource blocks per user account in the target neighboring cell according to the number of second resource blocks and the number of neighboring cell user accounts in the target neighboring cell.

In these embodiments, when determining the number of remaining resource blocks of the target neighboring cell, the bandwidth of the target neighboring cell can be first obtained in the serving cell, and the number of resource blocks corresponding to the bandwidth can be determined and used as the number of second resource blocks. The correspondence between the bandwidth and the number of resource blocks is set in advance in the protocol. Therefore, the number of second resource blocks corresponding to the bandwidth of the target neighboring cell can be directly determined according to the correspondence.

In these embodiments, it is also necessary to obtain the maximum number of neighboring cell user accounts that can be used in the target neighboring cell, and use it as the number of neighboring cell user accounts. Then, the number of second resource blocks is divided by the number of neighboring cell user accounts to determine or obtain the average number of first resource blocks per user account in the target neighboring cell.

In these embodiments, the number of remaining resource blocks of the target neighboring cell is determined according to the number of second resource blocks corresponding to the bandwidth of the target neighboring cell and the downlink resource block utilization rate, thereby ensuring the accuracy of the determined number of remaining resource blocks. In addition, the average number of first resource blocks per user account in the target neighboring cell is calculated and determined according to the number of second resource blocks corresponding to the bandwidth of the target neighboring cell and the number of neighboring cell user accounts, thereby ensuring the accuracy and effectiveness of the calculated number of first resource blocks.

In some embodiments, after predicting the neighboring cell downlink perceived rate of the target user account in the target neighboring cell according to the neighboring cell downlink spectral efficiency, the method further includes:
Step k, after there are multiple target neighboring cells, determining the neighboring cell downlink perceived rate of the target user account in each target neighboring cell; determining the largest neighboring cell downlink perceived rate among the neighboring cell downlink perceived rates, and selecting the target neighboring cell corresponding to the largest neighboring cell downlink perceived rate for processing.

In these embodiments, when it is determined in the serving cell that the target user account logged in in the terminal held by the user is in the coverage of multiple cells at the same time, all cells except the serving cell in these cells can be used as target neighboring cells. Therefore, after the serving cell detects the existence of multiple target neighboring cells, the same processing operation can be performed on each target neighboring cell to obtain the neighboring cell downlink perceived rate of the target user account in each target neighboring cell. Then, the downlink perceived rates of each neighboring cell are compared, and the largest neighboring cell downlink perceived rate is selected. The target neighboring cell corresponding to the largest downlink perceived rate of the neighboring cell is used as the target neighboring cell that the target user account finally needs to process. The processing may include cell handover, SN addition, SN change, CA secondary carrier addition, CA secondary carrier replacement, PSCell change in MR-DC, and the like.

In these embodiments, after there are multiple target neighboring cells, the largest neighboring cell downlink perceived rate is determined among the neighboring cell downlink perceived rates corresponding to each target neighboring cell, and the target neighboring cell corresponding to the largest neighboring cell downlink perceived rate is selected for processing, thereby ensuring that the user is always in a cell with the best downlink perception.

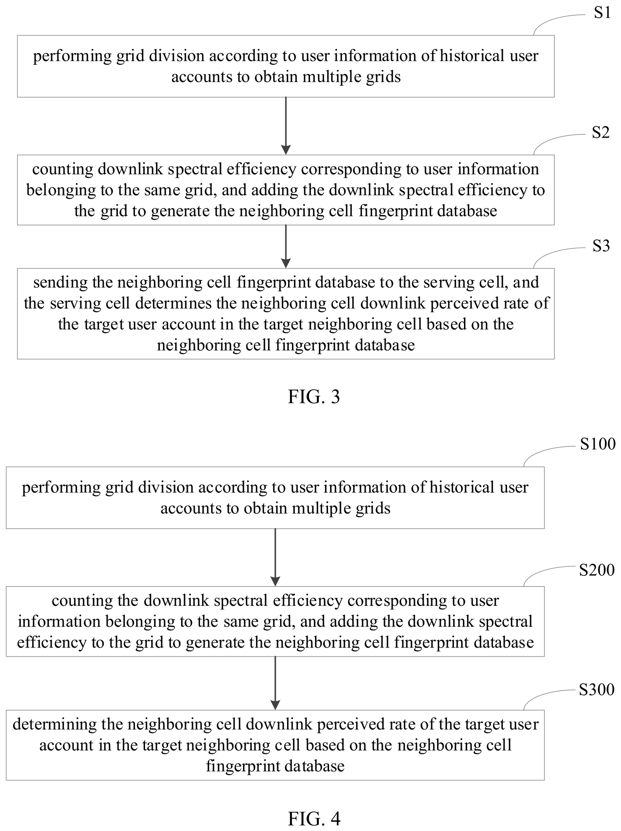

Based on the first or second embodiment of the present application, a third embodiment of the rate prediction method of the present application is proposed. In these embodiments, referring to FIG. 3, the rate prediction method, applied to the target neighboring cell, includes:
Step S1, performing grid division according to user information of historical user accounts to obtain multiple grids;
Step S2, counting downlink spectral efficiency corresponding to user information belonging to the same grid, and adding the downlink spectral efficiency to the grid to generate the neighboring cell fingerprint database; and
Step S3, sending the neighboring cell fingerprint database to the serving cell, and the serving cell determines the neighboring cell downlink perceived rate of the target user account in the target neighboring cell based on the neighboring cell fingerprint database.

In these embodiments, the neighboring cell fingerprint database of the target neighboring cell can be constructed in the target neighboring cell, and after the neighboring cell fingerprint database is constructed, the neighboring cell fingerprint database can be sent to other cells or stored in the storage area of the target neighboring cell. In these embodiments, each cell can obtain its own neighboring cell fingerprint database in the same way as the target neighboring cell.

Therefore, in these embodiments, the rate prediction method can be applied to the target neighboring cell, and in the target neighboring cell, the user information of the historical user account in the target neighboring cell is first determined and obtained.

In some embodiments, the user information of the historical user account may include at least one of the reference signal received power of the neighboring cell downlink reference signal of the historical user account in the target neighboring cell, the reference signal received quality of the neighboring cell downlink reference signal, the signal to interference plus noise ratio of the neighboring cell downlink reference signal, the neighboring cell downlink path loss, the chip type and location information, and may also include the downlink SE, that is, the neighboring cell downlink perceived rate of the historical user account in the target neighboring cell.

The grid division is performed according to the historical user information to obtain multiple grids. For example, the collected downlink reference signal RSRP measured by the terminal, the downlink reference signal SINR measured by the terminal, the downlink path loss, the chip type, and the location information are divided into the same category for users with the same characteristics. Each category is a grid, and the mean, maximum, minimum, variance and other information of the downlink SE of these users are counted in these grids.

In some embodiments, after grid division, the downlink spectral efficiency corresponding to the historical user information belonging to the same grid can be counted, and this downlink spectral efficiency can be added to the grid. After the addition is completed in each grid, it is used as the neighboring cell fingerprint database corresponding to the target neighboring cell, to subsequently directly determine the neighboring cell downlink perceived rate of the target user account in the target neighboring cell according to the neighboring cell fingerprint database in the serving cell or the target neighboring cell.

In some embodiments, after the target neighboring cell generates the neighboring cell fingerprint database, if it is necessary to predict the neighboring cell downlink perceived rate of the target user account in the target neighboring cell in the serving cell, the neighboring cell fingerprint database needs to be sent to the serving cell. Then, the serving cell determines the neighboring cell downlink spectral efficiency corresponding to the target user account in the neighboring cell fingerprint database corresponding to the target neighboring cell; obtains the number of available resource blocks remaining in the downlink time slot of the target neighboring cell; determines a maximum amount of data to be sent in the downlink time slot in the target neighboring cell according to the neighboring cell downlink spectral efficiency and the number of available resource blocks; predicts the neighboring cell downlink perceived rate of the target user account in the target neighboring cell according to the maximum amount of data to be sent and the number of scheduled downlink time slots corresponding to the target neighboring cell.

For example, the target neighboring cell divides itself into grids according to the information of historical users in its own cell (such as RSRP of the downlink reference signal, RSRQ or SINR of the downlink reference signal, user location information, and chip type of the terminal used by the user). The historical user information required for dividing the grid can be based on RSRP of the downlink reference signal, RSRQ or SINR of the downlink reference signal, or can be based on the user's location information and/or chip type to help improve the accuracy of grid division. Then, in each divided grid, the target neighboring cell counts the downlink SE information corresponding to the historical user information belonging to the same grid. The target neighboring cell generates the neighboring cell downlink SE fingerprint database based on the grid results of its own division and the downlink SE statistics of the neighboring cell users, and uses it as the neighboring cell fingerprint database. The neighboring cell fingerprint database is sent to other cells, such as the servicing cell where the user's terminal is located. The serving cell can then directly infer the grid where the user is located in the target neighboring cell fingerprint database according to the relevant information of the target user account logged in by the user's terminal, and then determine the neighboring cell downlink perceived rate of the target user account in the target neighboring cell from the corresponding grid.

In these embodiments, grid division is performed according to user information of historical user accounts, and the downlink spectral efficiency corresponding to the user information belonging to the same grid is counted and added to the grid to generate the neighboring cell fingerprint database. Then, the neighboring cell fingerprint database is sent to the serving cell, so that the serving cell predicts the neighboring cell downlink perceived rate of the target user account in the target neighboring cell, thereby avoiding the phenomenon that only the quality of the neighboring cell downlink channel can be obtained through RSRP, RSRQ and SINR, and the downlink perceived rate cannot be fully reflected, resulting in low accuracy in the prediction of the neighboring cell downlink perceived rate. In addition, the prediction is made directly through the neighboring cell fingerprint database of the target neighboring cell, which improves the accuracy in the prediction of the neighboring cell downlink perceived rate. After predicting the neighboring cell downlink perceived rate of the target user account in the target neighboring cell, it is possible to perform handover based on the predicted neighboring cell downlink perceived rate in the subsequent handover process to ensure that the user is always in a cell with optimal downlink perception.

In some embodiments, step S2, after adding the downlink spectral efficiency to the grid to generate the neighboring cell fingerprint database corresponding to the target neighboring cell, the method further includes:
Step y, receiving the target user account sent by the serving cell and the target user information corresponding to the target user account, determining the neighboring cell downlink perceived rate of the target user account in the target neighboring cell according to the neighboring cell fingerprint database, and feeding back the neighboring cell downlink perceived rate to the serving cell.

In these embodiments, the target user information includes at least one of the reference signal received power of the neighboring cell downlink reference signal of the target user account in the target neighboring cell, the reference signal received quality of the neighboring cell downlink reference signal, the signal to interference plus noise ratio of the neighboring cell downlink reference signal, the neighboring cell downlink path loss, the chip type and the location information.

In these embodiments, after the target neighboring cell generates the neighboring cell fingerprint database, if it is necessary to predict the neighboring cell downlink perceived rate of the target user account in the target neighboring cell. The target user account and the target user information corresponding to the target user account sent by the serving cell are received in the target neighboring cell, and the following steps are performed in the target neighboring cell: determining the neighboring cell downlink spectral efficiency corresponding to the target user account in the neighboring cell fingerprint database corresponding to the target neighboring cell; obtaining the number of available resource blocks remaining in the downlink time slot of the target neighboring cell; determining the maximum amount of data to be sent in the downlink time slot of the target neighboring cell according to the neighboring cell downlink spectral efficiency and the number of available resource blocks; predicting the neighboring cell downlink perceived rate of the target user account in the target neighboring cell according to the maximum amount of data to be sent and the number of scheduled downlink time slots corresponding to the target neighboring cell, and the like. After determining the neighboring cell downlink perceived rate of the target user account in the target neighboring cell, the neighboring cell downlink perceived rate is also sent to the serving cell, so that the user can know the neighboring downlink perceived rate of the target user account in the target neighboring cell through the serving cell.

In these embodiments, by predicting the neighboring cell downlink perceived rate of the target user account in the target neighboring cell in the serving cell or the target neighboring cell, the validity of the predicted neighboring cell downlink perceived rate can be guaranteed.

Based on any one of the first to third embodiments of the present application, a fourth embodiment of the rate prediction method of the present application is proposed. In these embodiments, referring to FIG. 4, the rate prediction method, applied to a base station, includes:
Step S100, performing grid division according to user information of historical user accounts to obtain multiple grids;
Step S200, counting the downlink spectral efficiency corresponding to user information belonging to the same grid, and adding the downlink spectral efficiency to the grid to generate the neighboring cell fingerprint database; and
Step S300, determining the neighboring cell downlink perceived rate of the target user account in the target neighboring cell based on the neighboring cell fingerprint database.

In these embodiments, the base station side can create the fingerprint database corresponding to each cell, that is, the neighboring cell fingerprint database. After the neighboring cell fingerprint database of each cell is built, the neighboring cell fingerprint database can be exchanged between the cells, that is, each cell can store and retain the neighboring cell fingerprint database of the adjacent cell.

In these embodiments, the neighboring cell fingerprint database of each cell is constructed in the same manner, that is, the grid division is performed according to the user information of the historical user account in the cell to obtain multiple grids. For example, according to the collected downlink reference signal RSRP measured by the terminal, the downlink reference signal SINR measured by the terminal, the downlink path loss, the chip type, and the location information, users with the same characteristics are divided into the same category, and each category is a grid. The mean, maximum, minimum, variance, and other information of the downlink SE of these users are counted in these grids. In some embodiments, after grid division, the downlink spectral efficiency corresponding to the historical user information belonging to the same grid can be counted and the downlink spectral efficiency can be added to the grid, and after the addition is completed in each grid, it is used as the neighboring cell fingerprint database, to directly determine the neighboring cell downlink perceived rate of the target user account in the target neighboring cell in the serving cell or the target neighboring cell according to the neighboring cell fingerprint database.

The user information of the historical user account includes at least one of the reference signal received power of the neighboring cell downlink reference signal of the historical user account in the target neighboring cell, the reference signal received quality of the neighboring cell downlink reference signal, the signal to interference plus noise ratio of the neighboring cell downlink reference signal, the neighboring cell downlink path loss, the chip type and the location information. For example, the user information of the historical user account includes the reference signal received power of the neighboring cell downlink reference signal of the historical user account in the target neighboring cell, the reference signal received quality of the neighboring cell downlink reference signal, or the signal to interference plus noise ratio of the neighboring cell downlink reference signal. In addition, to assist in improving the accuracy of grid division in the neighboring cell fingerprint database, the user information of the historical user account can also be supplemented with at least one of the neighboring cell downlink path loss, chip type and location information, based on the reference signal reception power of the neighboring cell downlink reference signal, the reference signal reception quality of the neighboring cell downlink reference signal, or the signal to interference plus noise ratio of the neighboring cell downlink reference signal of the historical user account in the target neighboring cell.

After the base station determines the neighboring cell fingerprint database in the target neighboring cell, it can directly obtain the user information of the target user account, filter out the downlink spectral efficiency matching the user information of the target user account in the neighboring cell fingerprint database, and then send it to the serving cell.

In addition, in one scenario, the neighboring cell fingerprint database can be sent to the serving cell, and the serving cell determines the neighboring cell downlink perceived rate of the target user account in the target neighboring cell based on the neighboring cell fingerprint database. Specifically, the serving cell can select the downlink spectral efficiency that matches the user information of the target user account from the neighboring cell fingerprint database, that is, the neighboring cell downlink spectral efficiency, then obtain the number of available resource blocks remaining in the downlink time slot in the target neighboring cell, predict the maximum amount of data to be sent in the downlink time slot in the target neighboring cell according to the number of available resource blocks and the neighboring cell downlink spectral efficiency, and predict the neighboring cell downlink perceived rate of the target user account in the target neighboring cell based on the maximum amount of data to be sent and the number of scheduled downlink time slots corresponding to the target neighboring cell.

In addition, in one scenario, after the base station detects the target user account and the user information of the target user account sent by the serving cell, the target user account and the user information of the target user account may be sent to the target neighboring cell, so that the target neighboring cell can determine the neighboring cell downlink perceived rate of the target user account in the target neighboring cell according to its own neighboring cell fingerprint database and the user information of the target user account, and feed back the neighboring cell downlink perceived rate to the base station, which is then fed back to the serving cell.

In these embodiments, grid division is performed according to user information of historical user accounts, and the downlink spectral efficiency corresponding to the user information belonging to the same grid is counted and added to the grid to generate the neighbor cell fingerprint database. Then, the neighbor cell downlink perceived rate of the target user account in the target neighbor cell is determined according to the neighbor cell fingerprint database, thereby avoiding the phenomenon that only the quality of the neighbor cell downlink channel can be obtained through RSRP, RSRQ, and SINR, and the downlink perceived rate cannot be fully reflected, resulting in low accuracy in the prediction of the neighbor cell downlink perceived rate. In addition, the prediction is directly made through the neighbor cell fingerprint database of the target neighbor cell, which improves the accuracy in the prediction of the neighbor cell downlink perceived rate. After predicting the neighboring cell downlink perceived rate of the target user account in the target neighboring cell, handover can be performed based on the predicted neighboring cell downlink perceived rate in the subsequent handover process to ensure that the user is always in a cell with optimal downlink perception.

In addition, the present application also provides an electronic device, which includes a memory, a processor, and a rate prediction program stored in the memory and executable on the processor. When the rate prediction program is executed by the processor, the rate prediction method described above is implemented.

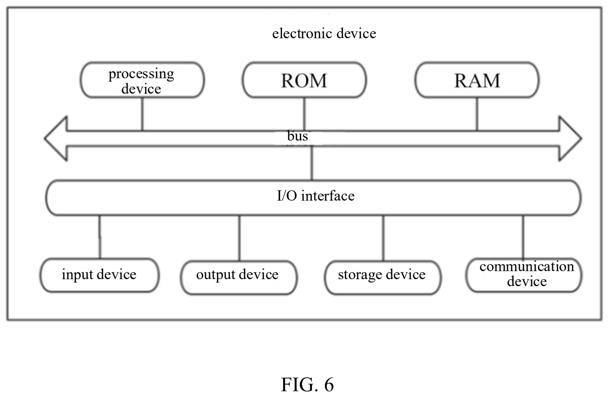

In addition, in some embodiments, FIG. 6 is a schematic structural diagram of an electronic device according to an embodiment of the present application. As shown in FIG. 6, at the hardware level, the electronic device includes a processor, and also includes an internal bus, a network interface, and a memory. The memory may include an internal memory, such as a high-speed random access memory (RAM), and may also include a non-volatile memory, such as at least one disk storage, etc. The electronic device may also include hardware required for other services. The processor, the network interface and the memory can be connected to each other through an internal bus, which can be an industry standard architecture (ISA) bus, a peripheral component interconnect (PCI) bus or an extended industry standard architecture (EISA) bus. The bus can be divided into an address bus, a data bus, a control bus, etc. For ease of representation, only one bidirectional arrow is used in FIG. 6, but it does not mean that there is only one bus or one type of bus. The memory is used to store programs. The program may include a program code, and the program code includes a computer operation instruction. The processor reads the corresponding computer program from the non-volatile memory into the memory and then runs it, forming a shared resource access control device at the logical level. The processor executes the program stored in the memory and is used to execute the above-mentioned rate prediction method.

The specific embodiments of the electronic device of the present application are basically the same as the various embodiments of the above-mentioned rate prediction method, and will not be repeated here.

In addition, to achieve the above-mentioned purpose, the present application also provides a computer readable storage medium, on which the rate prediction program is stored, and when the rate prediction program is executed by the processor, the rate prediction method as described above is implemented.

The specific embodiments of the computer readable storage medium of the present application are basically the same as the various embodiments of the above-mentioned rate prediction method, and will not be repeated here.

Those skilled in the art will appreciate that all or some of the steps, systems, and functional modules/units in the methods disclosed above may be implemented as software, firmware, hardware, and appropriate combinations thereof. In hardware embodiments, the division between the functional modules/units mentioned in the above description does not necessarily correspond to the division of physical components; for example, a physical component may have multiple functions, or a function or step may be performed by several physical components in cooperation. Some or all of the physical components may be implemented as software executed by a processor, such as a central processing unit, a digital signal processor, or a microprocessor, or as hardware, or as an integrated circuit, such as an application specific integrated circuit. Such software may be distributed on a computer-readable medium, which may include computer storage media (or non-transitory media) and communication media (or transient media). As is well known to those skilled in the art, the term "computer storage media" includes volatile and non-volatile, removable and non-removable media implemented in any method or technology for storage of information, such as computer-readable instructions, data structures, program modules, or other data. Computer storage media include, but are not limited to, RAM, ROM, EEPROM, flash memory or other memory technology, CD-ROM, digital versatile disks (DVD) or other optical disk storage, magnetic cassettes, magnetic tapes, magnetic disk storage or other magnetic storage devices, or any other medium that can be used to store the desired information and can be accessed by a computer. In addition, it is well known to those skilled in the art that communication media typically include computer-readable instructions, data structures, program modules, or other data in a modulated data signal such as a carrier wave or other transport mechanism, and may include any information delivery media.

The above are only some embodiments of the present application, and are not intended to limit the scope of the present application. Any equivalent structure or equivalent process transformation made using the contents of the specification and drawings of the present application, or directly or indirectly applied in other related technical fields, are also included in the scope of the present application.

## Claims

1. A rate prediction method, applied to a service cell, **characterized by** comprising:
obtaining a neighboring cell fingerprint database sent by a target neighboring cell, wherein the neighboring cell fingerprint database is generated by performing grid division according to user information of a historical user account, counting downlink spectral efficiency corresponding to user information belonging to a same grid, and adding the downlink spectral efficiency to a corresponding grid; and
determining a neighboring cell downlink perceived rate of a target user account in the target neighboring cell based on the neighboring cell fingerprint database.

2. The rate prediction method according to claim 1, wherein the determining the neighboring downlink perceived rate of the target user account in the target neighboring cell based on the neighboring cell fingerprint database comprises:
screening out downlink spectral efficiency that matches user information of the target user account in the neighboring cell fingerprint database, and configuring the matched downlink spectral efficiency as neighboring cell downlink spectral efficiency; and
predicting the neighboring downlink perceived rate of the target user account in the target neighboring cell according to the neighboring cell downlink spectral efficiency.

3. The rate prediction method according to claim 2, wherein the predicting the neighboring cell downlink perceived rate of the target user account in the target neighboring cell according to the neighboring cell downlink spectral efficiency comprises:
obtaining a number of available resource blocks remaining in a downlink time slot of the target neighboring cell, and determining maximum amount of data to be sent in the downlink time slot of the target neighboring cell according to the neighboring cell downlink spectral efficiency and the number of available resource blocks; and
predicting the neighboring cell downlink perceived rate of the target user account in the target neighboring cell according to the maximum amount of data to be sent and the number of scheduled downlink time slots corresponding to the target neighboring cell.

4. The rate prediction method according to claim 3, wherein the obtaining the number of available resource blocks remaining in the downlink time slot of the target neighboring cell comprises:
determining a number of remaining resource blocks of the target neighboring cell and an average number of first resource blocks per user account in the target neighboring cell; and
selecting one with largest data among the number of remaining resource blocks and the number of first resource blocks as the number of available resource blocks remaining in the downlink time slot of the target neighboring cell.

5. The rate prediction method according to claim 4, wherein the determining the number of remaining resource blocks of the target neighboring cell and the average number of first resource blocks per user account in the target neighboring cell comprises:
determining a number of second resource blocks corresponding to a bandwidth of the target neighboring cell;
determining the number of remaining resource blocks of the target neighboring cell according to the number of second resource blocks and a downlink resource block utilization rate corresponding to the target neighboring cell; and
determining the average number of first resource blocks per user account in the target neighboring cell according to the number of second resource blocks and a number of neighboring cell user accounts in the target neighboring cell.

6. The rate prediction method according to claim 2, wherein after predicting the neighboring downlink perceived rate of the target user account in the target neighboring cell according to the neighboring cell downlink spectral efficiency, the method further comprises:
after there are multiple target neighboring cells, determining neighboring downlink perceived rate of the target user account in each target neighboring cell; and
determining a largest neighboring cell downlink perceived rate among the neighboring downlink perceived rates, and selecting a target neighboring cell corresponding to the largest neighboring cell downlink perceived rate for processing.

7. The rate prediction method according to claim 1, wherein the user information comprises at least one of reference signal received power of a neighboring cell downlink reference signal of the historical user account in the target neighboring cell, reference signal received quality of the neighboring cell downlink reference signal, a signal to interference plus noise ratio of the neighboring cell downlink reference signal, neighboring cell downlink path loss, a chip type and location information.

8. A rate prediction method, applied to a target neighboring cell, **characterized by** comprising:
performing grid division according to user information of a historical user account to obtain multiple grids;
counting downlink spectral efficiency corresponding to user information belonging to a same grid, and adding the downlink spectral efficiency to the same grid to generate a neighboring cell fingerprint database; and
sending the neighboring cell fingerprint database to a serving cell, wherein the serving cell determines neighboring cell downlink perceived rate of the target user account in the target neighboring cell based on the neighboring cell fingerprint database.

9. The rate prediction method according to claim 8, wherein the user information of the historical user account comprises at least one of reference signal received power of a neighboring cell downlink reference signal of the historical user account in the target neighboring cell, reference signal received quality of the neighboring cell downlink reference signal, a signal to interference plus noise ratio of the neighboring cell downlink reference signal, neighboring cell downlink path loss, a chip type and location information.

10. The rate prediction method according to claim 8, wherein after adding the downlink spectral efficiency to the grid to generate the neighboring cell fingerprint database, the method further comprises:
receiving a target user account and user information of the target user account sent by the serving cell, determining a neighboring cell downlink perceived rate of the target user account in the target neighboring cell according to the user information of the target user account and the neighboring cell fingerprint database, and feeding back the neighboring cell downlink perceived rate to the serving cell.

11. A rate prediction method, applied to a base station, **characterized by** comprising:
performing grid division according to user information of a historical user account to obtain multiple grids;
counting downlink spectral efficiency corresponding to user information belonging to a same grid, and adding the downlink spectral efficiency to the same grid to generate a neighboring cell fingerprint database; and
determining a neighboring cell downlink perceived rate of the target user account in the target neighboring cell based on the neighboring cell fingerprint database.

12. The rate prediction method according to claim 11, wherein the user information of the historical user account comprises at least one of reference signal received power of a neighboring cell downlink reference signal of the historical user account in the target neighboring cell, reference signal received quality of the neighboring cell downlink reference signal, a signal to interference plus noise ratio of the neighboring cell downlink reference signal, neighboring cell downlink path loss, a chip type and location information.

13. An electronic device, **characterized by** comprising: a memory, a processor, and a rate prediction program stored in the memory and executable on the processor, wherein when the rate prediction program is executed by the processor, the rate prediction method according to any one of claims 1 to 12 is implemented.

14. A computer readable storage medium, **characterized in that** a rate prediction program is stored in the computer readable storage medium, when the rate prediction program is executed by a processor, the rate prediction method according to any one of claims 1 to 12 is implemented.
